# EUROPÄISCHE PATENTSCHRIFT

(11) **EP 3 113 986 B1**
(45) Veröffentlichungstag und Bekanntmachung des Hinweises auf die Patenterteilung: **17.07.2019**
(21) Anmeldenummer: 15712798.6
(22) Anmeldetag: 03.03.2015
(51) Int. Cl.: B60R 21/203

(54) **RASTZAPFEN ZUR BESFESTIGUNG EINES GASSACKMODULS AN EINEM KRAFTFAHRZEUG**
LOCKING PIN FOR MOUNTING AN AIRBAG MODULE ON A MOTOR VEHICLE
TENON D'ENCLENCHEMENT SERVANT À FIXER UN MODULE DE COUSSIN À GAZ SUR UN VÉHICULE AUTOMOBILE

(30) Priorität: 04.03.2014 DE 102014002785
(43) Veröffentlichungstag der Anmeldung: 11.01.2017
(73) Patentinhaber: TRW Automotive Safety Systems GmbH, 63743 Aschaffenburg (DE)
(72) Erfinder: BACHMANN, Stefan, 63872 Heimbuchenthal (DE); FUNK, André, 63739 Aschaffenburg (DE); HÖRST, Klaus, 63936 Schneeberg (DE); RUMPF, Dieter, 63322 Rödermark (DE); WEISS, Alexander, 63741 Aschaffenburg (DE)
(74) Vertreter: ZF TRW Patentabteilung
(86) Internationale Anmeldenummer: PCT/EP2015/000472
(87) Internationale Veröffentlichungsnummer: WO 2015/131993

(56) Entgegenhaltungen:
- EP-A2- 2 536 595
- WO-A1-2013/037497
- WO-A2-2011/100960
- FR-A1- 2 790 044
- US-A- 5 593 178

## Beschreibung

Die vorliegende Erfindung betrifft einen Rastzapfen zur höhenbeweglichen Befestigung eines Gassackmoduls an einem Skelett eines Kraftfahrzeuglenkrads und zumindest abschnittsweise innerhalb einer Umschäumung des Skeletts. Darüber hinaus betrifft die vorliegende Erfindung ein Kraftfahrzeuglenkrad mit einem Skelett und mindestens einem solchen Rastzapfen.

Aus dem Stand der Technik ist es bekannt, ein höhenbewegliches Gassackmodul bzw. ein Airbagmodul im Bereich eines Pralltopfes eines Kraftfahrzeuglenkrads zu montieren. Mit Hilfe des höhenbeweglichen Gassackmoduls können durch Niederdrücken seitens eines entsprechenden Kraftfahrzeugführers elektrische Zusatzfunktionen, wie z.B. die Betätigung einer Hupe oder dergleichen ausgelöst werden. Zur Befestigung des Gassackmoduls am Kraftfahrzeuglenkrad kommen üblicherweise Rastzapfen zum Einsatz, die zum einen einen Toleranzausgleich unter gleichzeitiger Minimierung erforderlicher Spaltmaße ermöglichen und die zum anderen eine mechanisch absolut zuverlässige Anbindung zwischen dem Gassackmodul und einem entsprechenden Lenkradskelett sowie dessen Umschäumung gewährleisten. Darüber hinaus soll im Idealfall eine gleitende, klemm- und ruckelfreie Betätigung der elektrischen Zusatzfunktionen durch das Niederdrücken des Gassackmoduls gewährleistet sein. Um einen definierten axialen Anschlag für das federnd befestigte Gassackmodul zu schaffen, sind die hergebrachten Rastzapfen in der Regel mit starren Anschlägen ausgerüstet.

Die gattungsgemäße WO 2011/100960 A2 zeigt einen Rastzapfen zur lösbaren Befestigung eines Gassackmoduls an einem Fahrzeuglenkrad, wobei der Rastzapfen formschlüssig in den geschäumten Lenkradmantel des Fahrzeuglenkrads eingebettet ist. Ferner kann der Rastzapfen Vorsprünge aufweisen, die beim Niederdrücken des Gassackmoduls zur Hupenbetätigung den Weg des Gassackmoduls auf ein vorgegebenes Maß begrenzen.

Eine Aufgabe der Erfindung ist es, einen neuartigen Rastzapfen zur höhenbeweglichen Befestigung eines Gassackmoduls bzw. eines Gasgenerators an einem metallischen Skelett eines Kraftfahrzeuglenkrads anzugeben, der ein komfortableres Bedienungserlebnis für den Kraftfahrzeugführer ermöglicht.

Diese Aufgabe wird gelöst durch einen Rastzapfen mit den Merkmalen des Anspruchs 1.

Hierdurch ergibt sich beim Niederdrücken des höhenbeweglichen Gassackmoduls (s.g. "Hupbewegung"), d.h. am unteren Ende des axialen Verfahrweges des Gassackmoduls, ein definiertes Anschlagverhalten für die Hupbewegung. Darüber hinaus erlaubt der Rastzapfen eine mechanisch unter allen Betriebsbedingungen absolut zuverlässige sowie zur Reduzierung von Spaltmaßen engtolerierte und dennoch leichtgängige höhenbewegliche Befestigung des Gassackmoduls an dem Kraftfahrzeuglenkrad. Darüber hinaus bleibt die zur Realisierung des definierten Anschlagverhaltens des Gassackmoduls notwendige Anzahl von konstruktiven Komponenten unverändert.

Erfindungsgemäß weist der mindestens eine Anschlag des Rastzapfens einen radial von dem Rastzapfen wegweisenden Steg auf, der in einen zumindest annähernd U-förmigen Bügel mit zwei in Richtung der Längsmittelachse beabstandeten Schenkeln übergeht.

Hierdurch ergibt sich ein federndes, komforterhöhendes Anschlagverhalten für die Hupbewegung, wobei das Einfeder- bzw. das

Dämpfungsverhalten des Anschlags in weiten Grenzen einstellbar ist.

Gemäß einer Ausführungsform ist an einem freien Ende eines ersten Schenkels des Bügels ein zapfenförmiges Auflager für das Gassackmodul ausgebildet und ein zweiter Schenkel des Bügels geht in den Steg über.

Hierdurch ist in Querrichtungen zur Längsmittelachse des Rastzapfens eine zuverlässige Lagesicherung der Auflager in Bezug zum Gassackmodul gegeben. Das mindestens eine Auflager kann zu diesem Zweck z.B. eine hohlzylindrische Vertiefung aufweisen, in die ein am Boden des Gassackmoduls bzw. des Gasgeneratorträgers ausgebildeter, zylindrischer Zapfen zumindest bereichsweise formschlüssig einbringbar ist.

Gemäß einer Ausführungsform verlaufen die Schenkel des Bügels zumindest annähernd parallel zu einem umlaufenden, radial nach außen gerichteten Flansch des Rastzapfens, wobei der Flansch zumindest annähernd senkrecht zu einer Längsmittelachse des Rastzapfens verläuft und an dem Flansch der mindestens eine Steg des mindestens einen Anschlags ausgebildet ist.

Hierdurch wirkt die Federkraft des mindestens einen Anschlags im Wesentlichen stets senkrecht zur Hupbewegung des Gassackmoduls.

Bevorzugt sind im Bereich des Flansches des Rastzapfens zwei Anschläge ausgebildet, die diametral gegenüberliegend zueinander positioniert sind.

Hierdurch lässt sich die Federwirkung der Anschläge erhöhen. Zugleich wird aufgrund der symmetrischen Anordnung ein Verkippen des Gassackmoduls in Bezug zur Längsmittelachse bei der Hupbewegung vermieden.

Vorzugsweise ist dem Rastzapfen mindestens eine zumindest annähernd U-förmige Halterung für eine elektrische Verbindungsleitung zugeordnet, wobei die Halterung einstückig zu dem Rastzapfen ausgebildet ist.

Hierdurch lässt sich mittels des Rastzapfens zugleich eine Lagesicherung für eine elektrische Verbindung zwischen dem Gassackmodul und dem Kraftfahrzeuglenkrad bereitstellen, die z.B. zur Ansteuerung des Gassackmoduls, einer Hupe, des Getriebes, einer Unterhaltungseinheit oder anderer elektrischer Komponenten im Bereich des Kraftfahrzeuglenkrads benutzt werden kann. Vorzugsweise ist die Halterung zwischen dem Flansch und einem Steg eines Anschlags integral zu diesen ausgeführt.

Gemäß einer Ausführungsform ist ein erster axialer Endabschnitt des Rastzapfens zur rastenden Aufnahme einer dem Gassackmodul zugeordneten Führungsbuchse ausgebildet und ein hiervon weggerichteter zweiter axialer Endabschnitt des Rastzapfens weist zumindest abschnittsweise einen umlaufenden, verdickten Rand mit einer zumindest abschnittsweise trapezförmigen Querschnittsgeometrie auf.

Hierdurch ist eine formschlüssige Verankerung innerhalb der Umschäumung des Kraftfahrzeuglenkrads und darüber hinaus eine mechanische Verrastung mit dem metallischen Skelett des Kraftfahrzeuglenkrads gegeben. Somit ist eine unter allen Betriebsbedingungen - einschließlich einer Auslösung des Gassackmoduls in einem Crashfall des Kraftfahrzeugs - zuverlässige mechanische Befestigung des Gassackmoduls an dem Skelett des Kraftfahrzeuglenkrades bzw. dessen Umschäumung gegeben.

Gemäß einer Ausführungsform ist ein erster axialer Endabschnitt des Rastzapfens zur rastenden Aufnahme einer dem Gassackmodul zugeordneten Führungsbuchse ausgebildet und ein hiervon weggerichteter zweiter axialer Endabschnitt des Rastzapfens ist mit dem Skelett des Kraftfahrzeuglenkrads stoffschlüssig verbindbar, insbesondere mit diesem thermisch fügbar.

Hierdurch steht eine alternative, in hohem Maße vibrationsresistente Befestigungsmöglichkeit des Rastzapfens am Skelett des Lenkrads zur Verfügung. Weiterhin können die Rastzapfen mittels einer Schraubverbindung mit dem Skelett des Lenkrades verbunden werden, um den Ausgleich größerer radialer Toleranzen zu ermöglichen.

Bevorzugt weist der Rastzapfen einen quer zu seiner Längsmittelachse verlaufenden Einschnitt mit einer näherungsweise planen sowie rechteckförmigen Grundfläche zur federnd-rastenden Aufnahme einer dem Gassackmodul zugeordneten Feder auf.

Infolge des Einschnittes ist eine besonders zuverlässige formschlüssige Verriegelung zwischen dem Rastzapfen und einer dem Boden des Gassackmoduls bzw. dem Boden des Generatorträgers zugeordneten Führungsbuchse gegeben. Eine Breite des Einschnittes ist in Bezug zu einem Durchmesser eines Federdrahts der Feder so bemessen, dass zugleich die gewünschte axiale Höhenbewegung des Gassackmoduls realisierbar ist.

Gemäß einer Ausführungsform ist an mindestens einem Steg des mindestens einen Anschlags ein im Wesentlichen pilzförmiger Zapfen ausgebildet, wobei dieser vom ersten axialen Endabschnitt des Rastzapfens weggerichtet ist.

Mit dem pilzförmigen Zapfen ist eine zusätzliche Verankerung der Stege in der Umschäumung des Skelettes des Kraftfahrzeuglenkrades realisierbar.

Nach Maßgabe einer weiteren Ausführungsform ist der Rastzapfen einstückig mit einem Kunststoffmaterial gebildet.

Hierdurch ist eine kostengünstige und großserientaugliche Fertigung des Rastzapfens z.B. im Spritzgussverfahren bei einer zugleich ausgezeichneten Maßhaltigkeit möglich. Das Kunststoffmaterial kann zur mechanischen Verstärkung auch mit einer Faserarmierung versehen sein.

Die eingangs definierte Aufgabe wird ebenfalls gelöst durch ein Kraftfahrzeuglenkrad mit einem Skelett und mindestens einem Rastzapfen zur höhenbeweglichen Befestigung eines Gassackmoduls an dem Skelett und zumindest abschnittsweise innerhalb einer Umschäumung des Skelettes, bei dem der Rastzapfen mindestens einen Anschlag für das Gassackmodul aufweist, der einstückig mit dem Rastzapfen ausgebildet ist.

Hierdurch ergibt sich beim Niederdrücken des höhenbeweglichen Gassackmoduls, d.h. am unteren Ende des axialen Verfahrweges des Gassackmoduls, ein definiertes, komforterhöhendes Anschlagverhalten. Darüber hinaus erlaubt der Rastzapfen eine mechanisch unter allen Betriebsbedingungen absolut zuverlässige sowie zur Reduzierung von Spaltmaßen engtolerierte und dennoch leichtgängige höhenbewegliche Befestigung des Gassackmoduls an dem Kraftfahrzeuglenkrad. Um eine möglichst kippsichere, klemmfreie sowie leichtgängige Höhenbeweglichkeit des Gassackmoduls in Relation zum Skelett des Kraftfahrzeuglenkrads zu gewährleisten, sind bevorzugt mindestens drei Rastzapfen mit einer korrespondierenden Anzahl von Führungs- bzw. Rastbuchsen des Gassackmoduls unter gleichzeitiger Schaffung eines zumindest bereichsweisen Formschlusses federnd miteinander verrastet.

Weitere Einzelheiten und vorteilhafte Weiterbildungen der Erfindung ergeben sich aus den im Folgenden beschriebenen und in den Zeichnungen dargestellten, in keiner Weise als Einschränkung der Erfindung zu verstehenden Ausführungsbeispielen.

Es zeigen:
- **Fig. 1**: eine Draufsicht auf ein Kraftfahrzeuglenkrad,
- **Fig. 2**: eine perspektivische, teilweise geschnittene Ansicht einer ersten Ausführungsform eines Rastzapfens zur höhenbeweglichen Befestigung eines Gassackmoduls an einem Kraftfahrzeuglenkrad gemäß der vorliegenden Erfindung,
- **Fig. 3**: eine Schnittansicht des Rastzapfens von Fig. 2,
- **Fig. 4**: eine perspektivische Ansicht des Rastzapfens von Fig. 2 und 3,
- **Fig. 5**: eine weitere perspektivische Ansicht des Rastzapfens von Fig. 4,
- **Fig. 6**: eine perspektivische Ansicht des gemäß einer zweiten Ausführungsform ausgebildeten Rastzapfens von Fig. 1, und
- **Fig. 7**: eine weitere perspektivische Ansicht des Rastzapfens von Fig. 6.

Gleiche oder gleich wirkende Teile werden in den verschiedenen Figuren mit denselben Bezugszeichen bezeichnet und gewöhnlich nur einmal beschrieben.

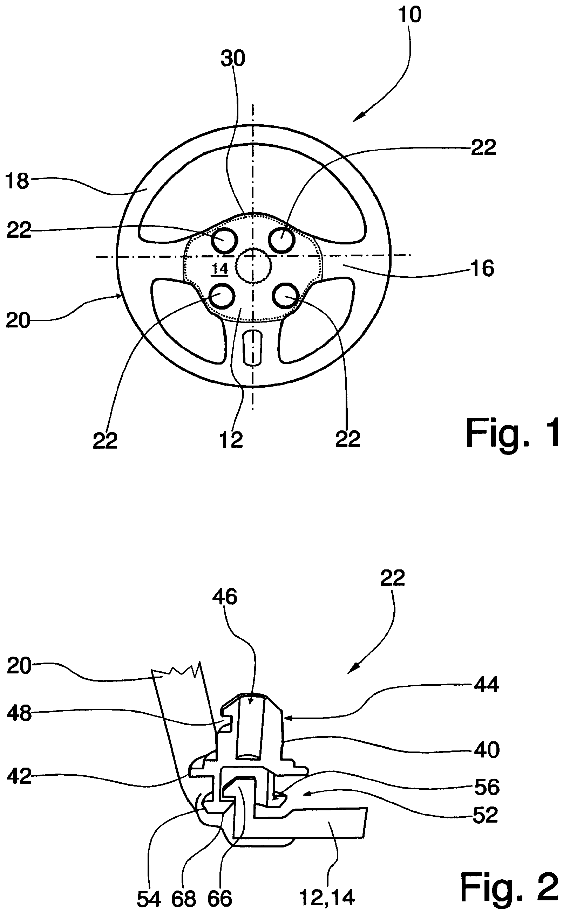

**Fig. 1** zeigt ein Kraftfahrzeuglenkrad 10, das ein bevorzugt metallisches Skelett 12 mit einer Trägerplatte 14, Speichen 16 und einen peripheren Kranz 18 aufweist. Der (Lenkrad-)Kranz 18, die Speichen 16 sowie Teile der Trägerplatte 14 des Kraftfahrzeuglenkrads 10 sind vorzugsweise mit einer Umschäumung 20 versehen, die mit einem geeigneten Schaumkunststoff gebildet ist.

Im Bereich der Trägerplatte 14 sind am Kraftfahrzeuglenkrad 10 illustrativ vier gleichartige Rastzapfen 22 angeordnet. Diese dienen zur in Bezug zur Zeichenebene senkrecht höhenbeweglichen Führung und Befestigung eines an sich bekannten Gassackmoduls 30, das hier nur mit einer punktierten Linie angedeutet ist und von dem hier nur ein Teil des Gehäuses bzw. des Generatorträgers dargestellt ist. Es wird jedoch darauf hingewiesen, dass die Anzahl der Rastzapfen 22 hier nur beispielhaft vier beträgt und nicht zur Einschränkung der Erfindung, die auch mit weniger oder mehr als vier Rastzapfen realisierbar ist.

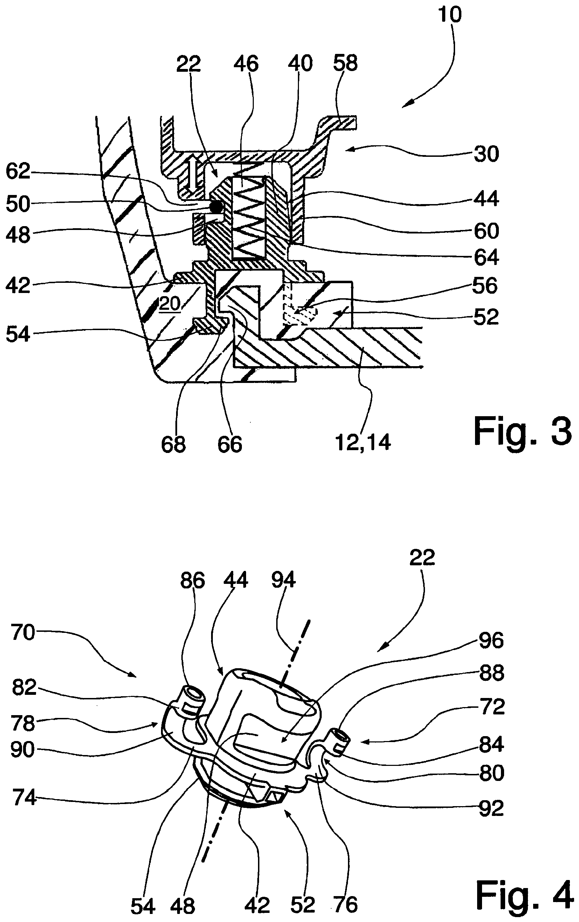

Die **Fig. 2** und **3** - auf die im weiteren Fortgang der Beschreibung zugleich Bezug genommen wird - illustrieren den Rastzapfen 22 von Fig. 1 mit einem in axialer Richtung mehrfach abgestuften, im Wesentlichen hohlzylindrischen Körper 40, an dem ein umlaufender, scheibenförmiger Flansch 42 bzw. Bund ausgebildet ist. Mit seinem umlaufenden Flansch 42 liegt der Rastzapfen 22 bündig auf dem im Bereich der Trägerplatte 14 angeordneten Teil der Umschäumung 20 des Kraftfahrzeuglenkrads 10 von Fig. 1 auf.

Ein erster axialer Endabschnitt 44 bzw. Führungsabschnitt des Rastzapfens 22 verfügt über eine leicht ballige Außenkontur. Stirnseitig ist in dem axialen Endabschnitt 44 eine axiale Vertiefung 46 ausgebildet. An der in Einbaulage des Rastzapfens 22 radial außen gelegenen Seite verfügt der erste axiale Endabschnitt 44 ferner über einen Einschnitt 48, der mit einer am Gassackmodul 30 bzw. einem daran ausgebildeten oder mit diesem verbundenen Generatorträger 58 fixierten Rastfeder 50 zusammenwirkt. In dem hier gezeigten Ausführungsbeispiel mit höhenbeweglichem Gassackmodul 30 ist die Höhe des Einschnittes 48 größer als der Durchmesser der Rastfeder 50 dimensioniert, wodurch eine definierte axiale Beweglichkeit des Gassackmoduls 30 für die Hupbewegung möglich ist, wie in Fig. 3 mit einem nicht gesondert gekennzeichneten Doppelpfeil illustriert.

Ein vom ersten axialen Endabschnitt 44 weggerichteter, zweiter axialer Endabschnitt 52 bzw. Verankerungsabschnitt des Rastzapfens 22 ist in die Umschäumung 20 der Trägerplatte 14 des Skeletts 12 eingebettet. Der zweite axiale Endabschnitt 52 verfügt über einen abschnittsweise umlaufenden, verdickten Rand 54, der eine näherungsweise trapezförmige Querschnittsgeometrie aufweist. Der zweite axiale Endabschnitt 52 weist ferner einen von der offenen Stirnseite des Rastzapfens 22 ausgehenden, umlaufenden Einschnitt 56 auf, der sich bis in den Bereich des Flansches 42 hinein erstreckt. Der Einschnitt 56 ist so angeordnet, dass er in Richtung der Trägerplatte 14 des Skeletts 12 weist.

An dem Generatorträger 58 des Gassackmoduls 30 sind unterseitig vier mit den Rastzapfen 22 korrespondierende Führungsbuchsen ausgebildet - von denen hier lediglich eine Führungsbuchse 60 repräsentativ für die übrigen dargestellt ist. Zwischen der Führungsbuchse 60 und dem illustrativ ballig ausgebildeten, ersten axialen Endabschnitt 44 des Rastzapfens 22 besteht im montierten Zustand ein zumindest bereichsweiser Formschluss, wobei die Führungsbuchse 60 einen Einschnitt 62 aufweist, durch den sich die Rastfeder 50 in Richtung des Rastzapfens 22 bewegen kann.

In der stirnseitigen Vertiefung 46 des ersten axialen Endabschnitts 44 des Rastzapfens 22 ist ferner eine axial vorgespannte Druckfeder 64 aufgenommen, die sich am Boden des Generatorträgers 58 und am Rastzapfen 22 abstützt, wodurch der Generatorträger 58 in Richtung seiner unbetätigten Grundposition belastet ist. Der axiale Verschiebeweg der Führungsbuchse 60 auf dem Rastzapfen 22 wird im vollständig ausgefederten Zustand des Generatorträgers 58 zuverlässig durch die in dem Einschnitt 56 liegende Rastfeder 50 begrenzt. Entsprechend wirken auch die anderen, hier nicht dargestellten Rastzapfen mit den ihnen zugeordneten Führungsbuchsen des Generatorträgers 58 zusammen.

Bei der Fertigung des Kraftfahrzeuglenkrads 10 wird das Lenkradskelett 12 zusammen mit dem Rastzapfen 22 in ein Formwerkzeug eingelegt. Beim Schließen des Formwerkzeugs wird der Rastzapfen 22 so positioniert, dass ein Rasthaken 66 an der Trägerplatte 14 in den Einschnitt 56 des zweiten axialen Endabschnitts 52 hinein ragt und hierbei einen nach radial innen weisenden, inneren Vorsprung 68 des Randes 54 hintergreift. Das geschlossene Formwerkzeug wird anschließend mit bekannten Lenkradschäumen befüllt, so dass die Umschäumung 20 des Kraftfahrzeuglenkrads 10 ausgebildet wird. Durch die offene Ausbildung des zweiten axialen Endabschnitts 52 des Rastzapfens 22 und dessen Einschnitt 56 kann der Schaumkunststoff während des Umschäumvorgangs in das Innere des zweiten axialen Endabschnitts 52 einfließen und den Rastzapfen 22 sicher innerhalb der Umschäumung 20 des Lenkradmantels fixieren. Durch das Zusammenwirken des Rasthakens 66 an der Trägerplatte 14 und dem hierzu als korrespondierende Rastkontur wirkenden inneren Vorsprung 68 des zweiten axialen Endabschnitts 52 wird eine zusätzliche Fixierung des Rastzapfens 22 an der Trägerplatte 14 bzw. dem Skelett 12 des Kraftfahrzeuglenkrads 10 erzielt. Diese redundante Verbindung kann auch den bei Auslösung des Gassackmoduls 30 auftretenden, hohen mechanischen Kräften standhalten und somit das Modul 30 sicher fixieren. Zwischen den restlichen Rastzapfen und Führungsbuchsen entsteht im Zuge des Umschäumens des Skeletts 12 des Kraftfahrzeuglenkrads 10 dieselbe stoff- und formschlüssige Verbindung.

Die mechanische Sicherung der Rastzapfen am Skelett 12 des Kraftfahrzeuglenkrads 10 kann alternativ durch einen Verbindungsbolzen, insbesondere durch einen Schraubbolzen, erfolgen. Die Verschraubung kann jeweils ausgehend von beiden Stirnseiten der axialen Endabschnitte 44, 52 der Rastzapfen erfolgen. Diese Verbindung kann im Gegensatz zur eng tolerierten Positionierung zum Lenkradmantel mit größeren Toleranzen insbesondere in radialer Richtung erfolgen.

Weiterhin ist eine stoffschlüssige Verbindung, z.B. durch thermisches Fügen, zwischen dem zweiten axialen Endabschnitt 52 der Rastzapfen 22 und der Trägerplatte 14 des Skelettes 12 des Kraftfahrzeuglenkrads 10 möglich. Hierbei sind die Rastzapfen bevorzugt einstückig mit einem ggfls. Faserarmierten, thermoplastischen Kunststoff gebildet und können z.B. im Wege des bekannten Spritzgussverfahrens in großserientauglicher Weise mit hoher Maßhaltigkeit kostengünstig gefertigt werden.

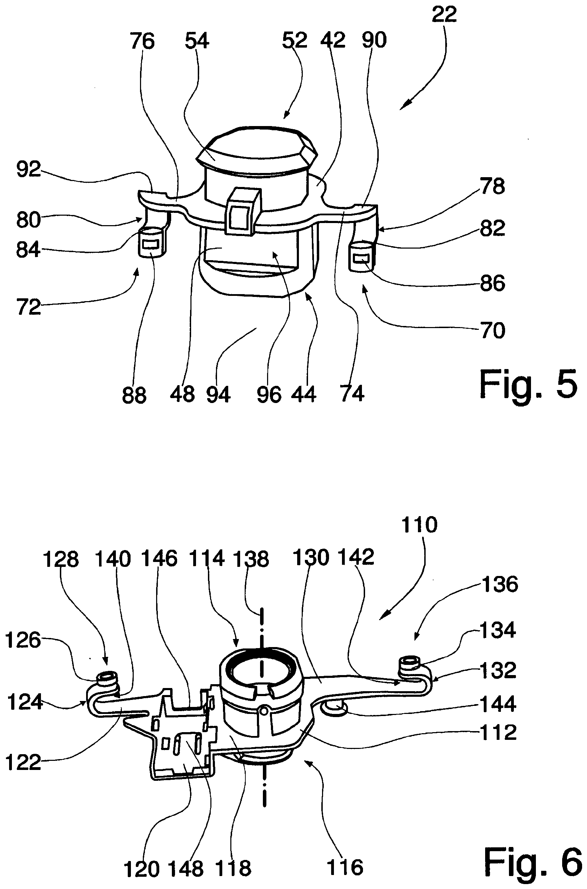

Die **Fig. 4** und **5** - auf die im weiteren Fortgang der Beschreibung zugleich Bezug genommen wird - zeigen den Flansch 42 des Rastzapfens 22, an den hier exemplarisch zwei Anschläge 70, 72 einstückig und federnd angeformt sind, die ein definiert gedämpftes, komforterhöhendes Anschlagverhalten des hier nicht eingezeichneten Gassackmoduls 30 am Skelett 12 des Kraftfahrzeuglenkrads 10 von Fig. 1 bei einer Hupbewegung bewirken. Die beiden zueinander diametral angeordneten Anschläge 70, 72 umfassen unter anderem jeweils einen Steg 74, 76, der jeweils in einen U-förmigen Bügel 78, 80 übergeht.

Freie Enden von ersten Schenkeln 82, 84 der beiden Bügel 78, 80 weisen jeweils ein zapfenförmiges Auflager 86, 88 für das Gassackmodul auf. Zweite Schenkel 90, 92 der Bügel 78, 80 gehen jeweils in die Stege 74, 76 über bzw. sind zu diesen integral ausgebildet.

Die Auflager 86, 88 können jeweils eine Vertiefung aufweisen, die im montierten Zustand mit Vorsprüngen am Boden des Gassackmoduls bzw. des Generatorträges zumindest bereichsweise formschlüssig zusammenwirken, um eine insbesondere radiale Lagesicherung der Auflager 86, 88 am Gassackmodul zu erreichen. Nicht dargestellte Längsachsen der Schenkel 82, 90 sowie 84, 92 der Bügel 78, 80 verlaufen bevorzugt näherungsweise senkrecht zu einer Längsmittelachse 94 des im Wesentlichen mehrfach abgestuft und hohlzylindrisch ausgebildeten Rastzapfens 22 bzw. quer zu den Stegen 74, 76. Die Bügel 78, 80 weisen hier exemplarisch in dieselbe Richtung, können aber auch entgegengesetzt orientiert sein.

Eine durch den scheibenförmigen Flansch 42 definierte Ebene verläuft bevorzugt senkrecht zu einer Längsmittelachse 94 des Körpers 44 des Rastzapfens 22. Infolge der U-förmigen bzw. C-förmig oder U-förmig gekippt ausgestalteten Bügel 78, 80 ergibt sich eine definiert federnd gedämpfte und komforterhöhende Anschlagwirkung des Rastzapfens 22 gegenüber dem sich im Fall einer Hupbewegung in Relation zum Rastzapfen 22 parallel zur Längsmittelachse 94 verschiebenden Gassackmodul bzw. dem Boden des Generatorträgers. Durch eine Variation der Geometrie der Bügel 78, 80 lassen sich das Dämpfungs-, Anschlag- und Federverhalten der Anschläge 70, 72 in weiten Grenzen und auf einfache Art und Weise einstellen.

Der erste axiale Endabschnitt 44 mit dem seitlichen Einschnitt 48, der beispielhaft eine plane, rechteckförmige Grundfläche 96 aufweist, dient zur höhenbeweglichen Verrastung des Gassackmoduls mittels der Rastfeder, während der stirnseitig verdickte Rand 54 des zweiten axialen Endabschnitts 52 mit dem Rasthaken an der Trägerplatte des Skeletts des Kraftfahrzeuglenkrads 10 von Fig. 1 verrastet und zusätzlich in die Umschäumung aus dem Schaumkunststoff eingebettet wird (vgl. insb. Fig. 3). Hinsichtlich der weiteren konstruktiven Einzelheiten des Rastzapfens 22 sei auf die Erläuterungen im Rahmen der Beschreibung der Fig. 2, 3 verwiesen. Abweichend von dem hier lediglich exemplarisch dargestellten Rastzapfen 22 mit zwei federnden Anschlägen 70, 72 können lediglich ein oder auch mehr als zwei Anschläge an jedem Rastzapfen vorgesehen sein, die beliebig zueinander beabstandet um den Flansch herum angeordnet sein können.

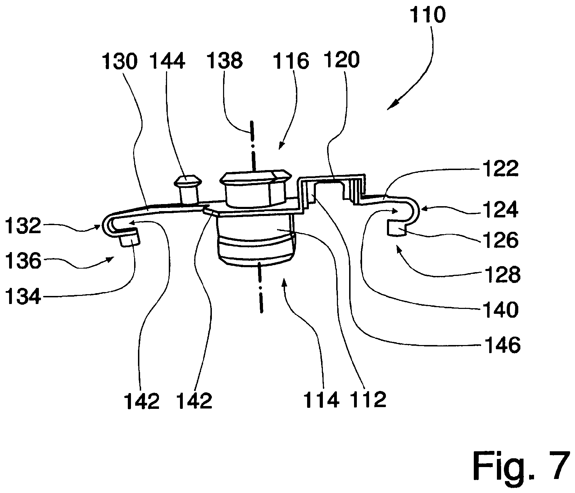

Die **Fig. 6** und **7** - auf die im weiteren Fortgang der Beschreibung zugleich Bezug genommen wird - zeigen einen gemäß einer zweiten Ausführungsform ausgebildeten Rastzapfen 110 mit einem bevorzugt zumindest im Wesentlichen hohlzylindrischen, mehrfach abgestuften Körper 112 mit einem ersten und einem zweiten axialen Endabschnitt 114, 116, zwischen denen ein umlaufender, im Wesentlichen scheibenförmiger Flansch 118 verläuft. Der erste axiale Endabschnitt 116 des Rastzapfens 110 dient zur formschlüssigen Führung und Verrastung mit den unterseitig am Boden des Gassackmoduls vorgesehenen Rastbuchsen, während der zweite axiale Endabschnitt 114 zur form- und stoffschlüssigen Verankerung mit einem Rasthaken des metallischen Skeletts des Kraftfahrzeuglenkrads und dessen Umschäumung dient. Hinsichtlich der weiteren Einzelheiten folgt der konstruktive Aufbau des Körpers 112 der zweiten Ausführungsform des Rastzapfens 110 exakt der Ausgestaltung der ersten Ausführungsform des Körpers des weiter oben erläuterten Rastzapfens, so dass zur Vermeidung von Wiederholungen an dieser Stelle auf die Beschreibung der Fig. 2 bis 5 verwiesen werden kann.

Als ein Unterschied zu der ersten Ausführungsform geht der Flansch 118 des Rastzapfens 110 seitlich in eine annähernd U-förmige bzw. schuhförmige Halterung 120 für eine nicht dargestellte elektrische Verbindungsleitung bzw. ein elektrisches Verbindungselement mit Anschlussleitungen oder dergleichen über. Diese Verbindungsleitung kann z.B. zur Ansteuerung des Gassackmoduls, einer Hupe, einer anderen optischen und/oder akustischen Signaleinrichtung, eines elektrisch schaltbaren Getriebes, einer elektronischen Unterhaltungseinheit oder anderer elektrischer Komponenten im Bereich des Kraftfahrzeuglenkrads benutzt werden.

An die Halterung 120 ist ein integraler Steg 122 angeformt, dessen freies Ende in einen U-förmigen Bügel 124 mit einem zapfenförmigen Auflager 126 übergeht, wobei der Bügel 124 und das Auflager 126 wiederum einen definiert federnd wirkenden Anschlag 128 für das hier nicht eingezeichnete Gassackmodul darstellen. Diametral zum Steg 122 ist hier exemplarisch ein weiterer Steg 130 an dem Flansch 118 ausgebildet, an dessen freiem Ende ein gleichfalls U-förmiger Bügel 132 mit einem Auflager 134 zur Ausbildung eines weiteren Anschlags 136 angeformt ist. Die Auflager 126, 134 weisen jeweils in Richtung des Gassackmoduls, so dass die federnden Bügel 124, 132 im Zusammenwirken mit den Auflagern 126, 134 die komforterhöhenden Anschläge 128, 136 für die im Zuge einer Betätigung der Hupe parallel zu einer Längsmittelachse 138 erfolgende Auf- und Abbewegung des Gassackmoduls bildet.

Abweichend von der ersten Ausführungsform, bei der die Schenkel der Bügel quer zu den Stegen angeordnet sind, verlaufen hier die Schenkel der U-förmigen Bügel 124, 132 parallel zu den Stegen 122, 130. An dem Steg 130 ist ferner ein illustrativ pilzförmiger Zapfen 144 ausgebildet, der von dem ersten axialen Endabschnitt 114 bzw. dem Gassackmodul weggerichtet ist, d.h. in Richtung der Trägerplatte des Skeletts des Kraftfahrzeuglenkrads orientiert ist.

Infolge des pilzförmigen Zapfens 144 ist eine zusätzliche mechanische Anbindung des Stegs 130 an die Umschäumung des Kraftfahrzeuglenkrads gegeben. Diese Befestigungsoption ist in der Regel von Vorteil, da beide Auflager 126, 134 im Idealfall symmetrisch zu der Längsmittelachse 138 des Rastzapfens 110 an dessen Körper 112 bzw. Flansch 118 angeordnet sind. Um dieses Symmetrieerfordernis unbeschadet der Integration der Halterung 120 zwischen dem Flansch 118 und dem (kurzen) Steg 122 zu erfüllen, muss der Steg 130 - im Vergleich zu den Stegen der ersten Ausführungsform des Rastzapfens - vorzugsweise in etwa um eine Breite der Halterung 120 verlängert ausgeführt und demzufolge mittels des pilzförmigen Zapfens 144 mittig ergänzend gehalten bzw. unterstützt werden.

Die U-förmige Halterung 120 verfügt bevorzugt endseitig über einen Anschlag 146 sowie mindestens ein Rastelement 148, insbesondere eine federnde Rastzunge oder dergleichen, zur Lagefixierung der Verbindungsleitung bzw. des Verbindungselements. Diese zweite Ausführungsform des erfindungsgemäßen Rastzapfens 110 ist gleichfalls bevorzugt einstückig mit einem geeigneten und ggfls. faserarmierten Kunststoffmaterial im Wege des Spritzgussverfahrens hergestellt.

Naturgemäß sind im Rahmen der vorliegenden Erfindung vielfache Abwandlungen und Modifikationen der geometrischen Ausgestaltung des Rastzapfens mit einem integrierten, federnd und dämpfend wirkenden Anschlag für das höhenbewegliche Gassackmodul denkbar.

## Patentansprüche

1. Rastzapfen (22, 110) zur in Richtung seiner Längsmittelachse (94, 138) höhenbeweglichen Befestigung eines Gassackmoduls (30) an einem Skelett (12) eines Kraftfahrzeuglenkrads (10) und zumindest abschnittsweise innerhalb einer Umschäumung (20) des Skeletts (12),
wobei der Rastzapfen (22, 110) mindestens einen Anschlag (70, 72, 128, 136) für das Gassackmodul (30) aufweist, der einstückig mit dem Rastzapfen (22, 110) ausgebildet ist,
**dadurch gekennzeichnet, dass** der mindestens eine Anschlag (70, 72, 128, 136) einen radial von dem Rastzapfen (22, 110) wegweisenden Steg (74, 76, 122, 130) aufweist, der in einen zumindest annähernd U-förmigen Bügel (78, 80, 124, 132) mit zwei in Richtung der Längsmittelachse (94, 138) beabstandeten Schenkeln (82, 84; 90, 92) übergeht.

2. Rastzapfen nach Anspruch 1, **dadurch gekennzeichnet, dass** an einem freien Ende eines ersten Schenkels (82, 84) des Bügels (78, 80, 124, 132) ein zapfenförmiges Auflager (86, 88, 126, 134) für das Gassackmodul (30) ausgebildet ist und ein zweiter Schenkel (90, 92) des Bügels (78, 80, 124, 132) in den Steg (74, 76, 122, 130) übergeht.

3. Rastzapfen nach Anspruch 2, **dadurch gekennzeichnet, dass** die Schenkel (82, 84, 90, 92) des Bügels (78, 80, 124, 132) zumindest annähernd parallel zu einem umlaufenden, radial nach außen gerichteten Flansch (42, 118) des Rastzapfens (22, 110) verlaufen, wobei der Flansch (42, 118) zumindest annähernd senkrecht zur Längsmittelachse (94, 138) des Rastzapfens (22, 110) verläuft und an dem Flansch (42, 118) der mindestens eine Steg (74, 76, 122, 130) des mindestens einen Anschlags (70, 72, 128, 136) ausgebildet ist.

4. Rastzapfen nach Anspruch 3, **dadurch gekennzeichnet, dass** im Bereich des Flansches (42, 118) des Rastzapfens (22, 110) zwei Anschläge (70, 72, 128, 136) ausgebildet sind, die diametral gegenüberliegend zueinander positioniert sind.

5. Rastzapfen nach zumindest einem der voranstehenden Ansprüche 1 bis 4, **dadurch gekennzeichnet, dass** der Rastzapfen (110) mindestens eine zumindest annähernd U-förmige Halterung (120) für eine elektrische Verbindungsleitung zugeordnet ist, wobei die Halterung (120) einstückig zu dem Rastzapfen (110) ausgebildet ist.

6. Rastzapfen nach zumindest einem der voranstehenden Ansprüche 1 bis 5, **dadurch gekennzeichnet, dass** ein erster axialer Endabschnitt (44) des Rastzapfens (22) zur rastenden Aufnahme einer dem Gassackmodul (30) zugeordneten Führungsbuchse (60) ausgebildet ist und ein hiervon weg gerichteter zweiter axialer Endabschnitt (52) des Rastzapfens (22) zumindest abschnittsweise einen umlaufenden, verdickten Rand (54) mit einer zumindest abschnittsweise trapezförmigen Querschnittsgeometrie aufweist.

7. Rastzapfen nach zumindest einem der voranstehenden Ansprüche 1 bis 5, **dadurch gekennzeichnet, dass** ein erster axialer Endabschnitt (114) des Rastzapfens (110) zur rastenden Aufnahme einer dem Gassackmodul (30) zugeordneten Führungsbuchse (60) ausgebildet ist und ein hiervon weggerichteter zweiter axialer Endabschnitt (116) des Rastzapfens (110) mit dem Skelett (12) des Kraftfahrzeuglenkrads (10) stoffschlüssig verbindbar, insbesondere mit diesem thermisch fügbar, ist.

8. Rastzapfen nach zumindest einem der voranstehenden Ansprüche 1 bis 7, **dadurch gekennzeichnet, dass** der Rastzapfen (22, 110) einen quer zu seiner Längsmittelachse (94, 138) verlaufenden Einschnitt (48) mit einer näherungsweise planen sowie rechteckförmigen Grundfläche (96) zur federnd-rastenden Aufnahme einer dem Gassackmodul (30) zugeordneten Feder (50) aufweist.

9. Rastzapfen nach Anspruch 8, **dadurch gekennzeichnet, dass** an mindestens einem Steg (22, 130) des mindestens einen Anschlags (128, 136) ein im Wesentlichen pilzförmiger Zapfen (144) ausgebildet ist, wobei dieser vom ersten axialen Endabschnitt (14) des Rastzapfens (110) weggerichtet ist.

10. Rastzapfen nach zumindest einem der voranstehenden Ansprüche 1 bis 9, **dadurch gekennzeichnet, dass** der Rastzapfen (22, 110) einstückig mit einem Kunststoffmaterial gebildet ist.

11. Kraftfahrzeuglenkrad (10) mit einem Skelett (12) und mindestens einem Rastzapfen (22, 110) nach zumindest einem der voranstehenden Ansprüche 1 bis 10.

## Claims

1. A locking pin (22, 110) for mounting an airbag module (30) in a height-movable manner in the direction of its longitudinal center axis (94, 138) on a skeleton (12) of a vehicle steering wheel (10) and at least in portions inside a foam wrapping (20) of the skeleton (12),
wherein the locking pin (22, 110) includes at least one stop (70, 72, 128, 136) for the airbag module (30) which is formed integrally with the locking pin (22, 110),
**characterized in that** the at least one stop (70, 72, 128, 136) includes a land (74, 76, 122, 130) radially pointing away from the locking pin (22, 110) which land merges into an at least approximately U-shaped bracket (78, 80, 124, 132) having two legs (82, 84; 90, 92) spaced apart in the direction of the longitudinal center axis (94, 138).

2. The locking pin according to claim 1, **characterized in that** a pin-shaped support (86, 88, 126, 134) for the airbag module (30) is formed at a free end of a first leg (82, 84) of the bracket (78, 80, 124, 132) and a second leg (90, 92) of the bracket (78, 80, 124, 132) merges into the land (74, 76, 122, 130).

3. The locking pin according to claim 2, **characterized in that** the legs (82, 84, 90, 92) of the bracket (78, 80, 124, 132) extend at least approximately in parallel to a circumferential radially outwardly directed flange (42, 118) of the locking pin (22, 110), wherein the flange (42, 118) extends at least approximately perpendicularly to the longitudinal center axis (94, 138) of the locking pin (22, 110) and at the flange (42, 118) the at least one land (74, 76, 122, 130) of the at least one stop (70, 72, 128, 136) is formed.

4. The locking pin according to claim 3, **characterized in that** two stops (70, 72, 128, 136) that are positioned diametrically opposite to each other are formed in the area of the flange (42, 118) of the locking pin (22, 110).

5. The locking pin according to at least one of the preceding claims 1 to 4, **characterized in that** at least one at least approximately U-shaped holder (120) for an electric connecting line is assigned to the locking pin (110), the holder (120) being formed integrally with the locking pin (110).

6. The locking pin according to at least one of the preceding claims 1 to 5, **characterized in that** a first axial end portion (44) of the locking pin (22) is formed for receiving a guiding bush (60) assigned to the airbag module (30) by locking and a second axial end portion (52) of the locking pin (22) facing away therefrom at least in portions includes a circumferential thickened edge (54) having a cross-sectional geometry that is trapezoidal at least in portions.

7. The locking pin according to at least one of the preceding claims 1 to 5, **characterized in that** a first axial end portion (114) of the locking pin (110) is formed for receiving a guiding bush (60) assigned to the airbag module (30) by locking and a second axial end portion (116) of the locking pin (110) facing away therefrom can be connected to the skeleton (12) of the vehicle steering wheel (10) by adhesive force, especially can be thermally joined thereto.

8. The locking pin according to at least one of the preceding claims 1 to 7, **characterized in that** the locking pin (22, 110) includes a cut (48) extending transversely to its longitudinal center axis (94, 138) having an approximately flat and rectangular base area (96) for receiving a spring (50) assigned to the airbag module (30) by resiliently locking the same.

9. The locking pin according to claim 8, **characterized in that** on at least one land (22, 130) of the at least one stop (128, 136) a substantially mushroom-shaped pin (144) is formed, said pin being directed away from the first axial end portion (14) of the locking pin (110).

10. The locking pin according to at least one of the preceding claims 1 to 9, **characterized in that** the locking pin (22, 110) is formed integrally with a plastic material.

11. A vehicle steering wheel (10) comprising a skeleton (12) and at least one locking pin (22, 110) according to at least one of the preceding claims 1 to 10.

## Revendications

1. Pied de verrouillage (22, 110) pour le montage, dans la direction de son axe central longitudinal (94, 138), d'un module airbag (30) déplaçable verticalement sur un moyeu (12) d'un volant de véhicule automobile (10) et au moins partiellement dans un boîtier en mousse (20) du moyeu (12),
pour lequel le pied de verrouillage (22, 110) comporte au moins une butée (70, 72, 128, 136) pour le module airbag (30), laquelle est formée d'une seule pièce avec le pied de verrouillage (22, 110),
**caractérisé en ce que** la au moins une butée (70, 72, 128, 136) présente une ailette (74, 76, 122, 130) radialement éloignée du pied de verrouillage (22, 110), laquelle se poursuit dans au moins approximativement un étrier en forme de U (78, 80, 124, 132) avec deux branches (82, 84, 90, 92) espacées dans la direction de l'axe central longitudinal (94, 138).

2. Pied de verrouillage selon la revendication 1, **caractérisée en ce que**, à une extrémité libre d'une première branche (82, 84) de l'étrier (78, 80, 124, 132) est disposé un support (86, 88, 126, 134) en forme de goupille pour le module airbag (30) et une seconde branche (90, 92) de l'étrier (78, 80, 124, 132) se poursuit dans l'ailette (74, 76, 122, 130).

3. Pied de verrouillage selon la revendication 2, **caractérisée en ce que** les branches (82, 84, 90, 92) de l'étrier (78, 80, 124, 132), courent au moins approximativement parallèlement à une bride (42, 118) circonférentielle dirigée radialement vers l'extérieur du pied de verrouillage (22, 110), pour lequel la bride (42, 118) s'étend au moins approximativement perpendiculaire à l'axe central longitudinal (94,138) du pied de verrouillage (22, 110) et sur la bride (42, 118) est réalisée la au moins une ailette (74, 76,122, 130) de la au moins une butée (70, 72, 128, 136).

4. Pied de verrouillage selon la revendication 3, **caractérisée en ce que** dans la région de la bride (42, 118) du pied de verrouillage (22, 110), deux butées (70, 72, 128, 136) sont formées, qui sont diamétralement opposées.

5. Pied de verrouillage selon au moins l'une des revendications précédentes 1 à 4, **caractérisée en ce que** le pied de verrouillage (110) comporte au moins une patte de fixation (120) au moins approximativement en forme de U pour une zone de connexion électrique, pour lequel la patte de fixation (120) est formée d'une seule pièce avec le pied de verrouillage (110).

6. Pied de verrouillage selon au moins l'une des revendications précédentes 1 à 5, **caractérisée en ce qu'**une première partie d'extrémité axiale (44) du pied de verrouillage (22) est destinée à recevoir le module airbag (30) associé à une bague de guidage (60) et éloignée de celle-ci la seconde partie d'extrémité axiale (52) du pied de verrouillage de blocage (22) présente au moins partiellement un bord circonférentiel épaissi (54) avec une géométrie en coupe transversale au moins partiellement trapézoïdale.

7. Goupille de verrouillage selon au moins l'une des revendications précédentes 1 à 5, **caractérisée en ce qu'**une première partie d'extrémité axiale (114) du pied de verrouillage (110) est destinée à recevoir un module airbag (30) associé à une bague de guidage (60) et éloignée de celle-ci une deuxième extrémité axiale (116) du pied de verrouillage (110) qui est connectable physiquement avec le moyeu (12) du volant (10) de véhicule automobile, en particulier par un moyen thermique.

8. Pied de verrouillage selon au moins l'une des revendications précédentes 1 à 7, **caractérisée en ce que** le pied de verrouillage (22, 110) présente une incision s'étendant transversalement à son axe central longitudinal (94, 138) avec une surface de base approximativement plane et rectangulaire (96) ayant un verrouillage à ressort recevant un ressort (50) associé au module airbag (30).

9. Pied de verrouillage selon la revendication 8, **caractérisée en ce qu'**au moins une ailette (22, 130) de la au moins une butée (128, 136) est formée d'une goupille sensiblement en forme de champignon (144), pour lequel cette butée est éloignée de la première partie d'extrémité axiale (14) du pied de verrouillage (110).

10. Pied de verrouillage selon au moins l'une des revendications précédentes 1 à 9, **caractérisée en ce que** le pied de verrouillage (22, 110) est formé d'un seul tenant avec un matériau plastique.

11. Volant de véhicule automobile (10) avec un moyeu (12) et au moins un pied de verrouillage (22, 110) selon au moins l'une des revendications précédentes 1 à 10.
